# FASCICULE DE BREVET EUROPEEN

(11) **EP 1 612 443 B1**
(45) Date de publication et mention de la délivrance du brevet: **14.02.2007**
(21) Numéro de dépôt: 05291407.4
(22) Date de dépôt: 30.06.2005
(51) Int. Cl.: F16D 25/08

(54) **Butée de débrayage et procédé de fabrication**
Kupplungsausrücklager und Verfahren zu seiner Herstellung.
Clutch release bearing and process for manufacturing the same.

(30) Priorité: 02.07.2004 FR 0407390
(43) Date de publication de la demande: 04.01.2006
(73) Titulaire: Aktiebolaget SKF, 415 50 Göteborg (SE)
(72) Inventeur: Bussit, Sylvain, 37100 Tours (FR); Caillault, Claude, 37000 Tours (FR)
(74) Mandataire: Casalonga, Axel

(56) Documents cités:
- EP-A1- 0 452 515
- EP-A2- 0 964 191
- US-A- 6 035 990

## Description

La présente invention concerne le domaine des butées de débrayage à commande hydraulique, notamment destinées à agir sur le diaphragme d'un embrayage, en particulier pour un véhicule automobile.

Les butées de débrayage comprennent, en général, un roulement dont une des bagues est tournante et l'autre bague est fixe. Entre la bague tournante et la bague non tournante sont disposées des billes régulièrement réparties dans le sens circonférentiel au moyen d'une cage, la bague tournante étant munie d'une surface d'attaque destinée à venir en contact avec l'extrémité des doigts composant le diaphragme de l'embrayage. Un élément de manoeuvre supporte le roulement et vient déplacer axialement le roulement de butée contre le diaphragme de l'embrayage.

Un élément de manoeuvre comprend un piston et des moyens pour rendre le piston solidaire axialement de la bague non tournante. Le piston est monté à coulissement dans une chambre annulaire d'un cylindre fixé sur le carter de boîte de vitesses. L'étanchéité entre le piston et le cylindre est assurée par un joint en contact direct avec le piston.

Dans certaines réalisations, le joint est fixé au piston par une pièce relativement complexe, voir le document FR A 2 772 444. Le coût de la pièce et de son montage est important.

Dans d'autres réalisations, le joint est dépourvu de liaison angulaire ou axiale avec le piston. Dans ce cas, il peut se produire des mouvements angulaires relatifs entre le joint et le piston, aussi bien lors des manoeuvres du piston que lorsque le piston est au repos à l'état embrayé, ces mouvements pouvant être dus aux vibrations ainsi qu'au couple interne de frottement entre la partie tournante et la partie non tournante du roulement supportée par le piston. Même si ces mouvements angulaires sont de faible amplitude, leur répétition est susceptible de provoquer des usures nuisibles à l'étanchéité du dispositif, voir par exemple le document FR-A-2 668 560.

La présente invention vise à remédier aux inconvénients des butées de débrayage précitées.

La présente invention propose un piston de butée de débrayage efficace, comprenant peu de pièces, et dans lequel le joint en appui axial sur le piston présente des risques réduits de rotation par rapport audit piston.

Le dispositif de butée de débrayage à commande hydraulique, selon un aspect de l'invention, est du type comprenant un élément de manoeuvre pourvu d'un piston annulaire et d'un joint d'étanchéité en contact avec le piston, et un palier à roulement solidaire axialement de l'élément de manoeuvre. Le piston comprend une surface arrière en contact avec le joint d'étanchéité, au moins une concavité étant formée localement dans ladite surface arrière du piston.

Le joint d'étanchéité est empêché de tourner par rapport au piston par la concordance de forme partielle ou totale entre la ou les concavités de la surface arrière du piston et la face correspondante du joint. Le joint peut être formé avec une surface avant radiale, la matière constitutive du joint venant en saillie dans la ou les concavités de la surface arrière du joint d'étanchéité lors de l'application d'un fluide sous pression dans la chambre hydraulique, le fluide sous pression venant en contact avec le joint du côté opposé au piston. L'ensemble formé par le joint et le piston peut être dépourvu de moyen d'accrochage axial et, en particulier, dépourvu de pièce supplémentaire prévue à cet effet.

Avantageusement, le piston comprend un corps et au moins un picot en saillie dans la concavité à partir dudit corps, le picot étant monobloc avec le corps. Le picot permet de renforcer la solidarisation angulaire du joint et du piston en accroissant les surfaces en concordance de forme entre ces deux pièces. Le picot peut être obtenu de façon particulièrement économique lors du moulage du piston, en particulier sous la forme d'un résidu de moulage.

Dans un mode de réalisation de l'invention, un picot est disposé dans chaque concavité. Le picot peut être en saillie axiale. Le picot peut affleurer la surface arrière du piston. Il est intéressant que le picot ne dépasse pas la surface arrière sensiblement radiale du piston. Le risque de bris du picot lors de la manipulation et du montage du piston s'en trouve réduit.

Avantageusement, un pluralité de concavités sont formées dans la surface arrière.

Avantageusement, le piston comprend une surface cylindrique intérieure et une surface cylindrique extérieure se raccordant à la surface arrière en formant un angle vif. L'étanchéité assurée par le joint contre les parois du cylindre avec lequel il coopère est alors particulièrement efficace.

Dans un mode de réalisation de l'invention, le piston est réalisé en matériau synthétique moulé. La surface arrière du piston présente une forme générale radiale.

L'invention concerne également un système de commande d'embrayage comprenant un cylindre et un dispositif de butée de débrayage à commande hydraulique. Le cylindre peut présenter une forme annulaire. Le cylindre peut être formé par une seule pièce métallique, par exemple en alliage léger, ou encore par un tube-guide formant une paroi de petit diamètre et par une pièce fixée sur le tube-guide et formant la paroi de grand diamètre du cylindre ainsi que le fond.

L'invention propose également un procédé de fabrication d'un piston annulaire de butée de débrayage, le piston comprenant une surface arrière dans laquelle au moins une cuvette est formée localement, procédé dans lequel on injecte la matière du piston dans un moule du côté de la surface arrière du piston. On entend par surface arrière, la surface prévue pour être disposée du côté de la chambre hydraulique du cylindre.

On entend par « localement », le fait que la concavité s'étend seulement sur une portion limitée de la surface arrière, au moins dans le sens circonférentiel.

Avantageusement, un moule d'injection de piston comprend des canaux d'injection de matière à mouler débouchant dans ladite cuvette. Un moule peut comprendre un canal d'injection par cuvette.

Avantageusement, au moins un picot en saillie est formé par un résidu de démoulage monobloc avec le reste du piston.

En d'autres termes, un piston de butée hydraulique est pourvu d'une surface arrière, axialement à l'opposé du roulement de butée, de forme sensiblement radiale, comprenant une ou plusieurs cuvettes en creux, dans laquelle est formé au moins un picot en saillie. Les cuvettes et les picots favorisent l'accrochage angulaire du joint d'étanchéité sur le piston, la cuvette permettant en outre de protéger le picot contre des chocs mécaniques externes préalables au montage de la butée, le picot étant en retrait ou en affleurement par rapport à la surface arrière du piston.

On bénéficie ainsi d'un ensemble piston et joint d'étanchéité associés, particulièrement robuste et fiable tout en restant économique. On met à profit le procédé de moulage par injection pour former les picots qui sont normalement considérés comme des résidus néfastes de démoulage. L'ensemble piston et joint d'étanchéité associés peut ainsi consister en seulement deux pièces convenablement liées angulairement l'une à l'autre. Il est en outre particulièrement avantageux de prévoir une injection par la surface arrière du piston qui permet de réaliser au niveau de la fermeture du moule des angles vifs entre les surfaces cylindriques du piston et la surface arrière du piston. Ces angles vifs diminuent fortement le risque de déformation et de fluage de la périphérie externe et interne du joint qui se produirait en présence d'une partie arrondie du piston près du cylindre, la partie de joint venant fluer dans les arrondis risquant d'être rapidement écrasée et dégradée lors des mouvements du piston et provoquant une altération progressive de l'étanchéité.

La présente invention sera mieux comprise à l'étude de la description détaillée de quelques modes de réalisation pris à titre d'exemples nullement limitatifs et illustrés par les dessins annexés, sur lesquels :
- la figure 1 est une vue en coupe axiale d'une butée de débrayage selon un aspect de l'invention ;
- la figure 2 est une vue en perspective de l'élément de manoeuvre de la butée de la figure 1;
- la figure 3 est une vue de détail de la figure 1;
- la figure 4 est une vue de détail du piston de la figure 1;
- la figure 5 est une vue partielle en coupe axiale d'un moule de piston de butée de débrayage; et
- la figure 6 est une vue de détail d'un joint et d'un piston selon l'art antérieur.

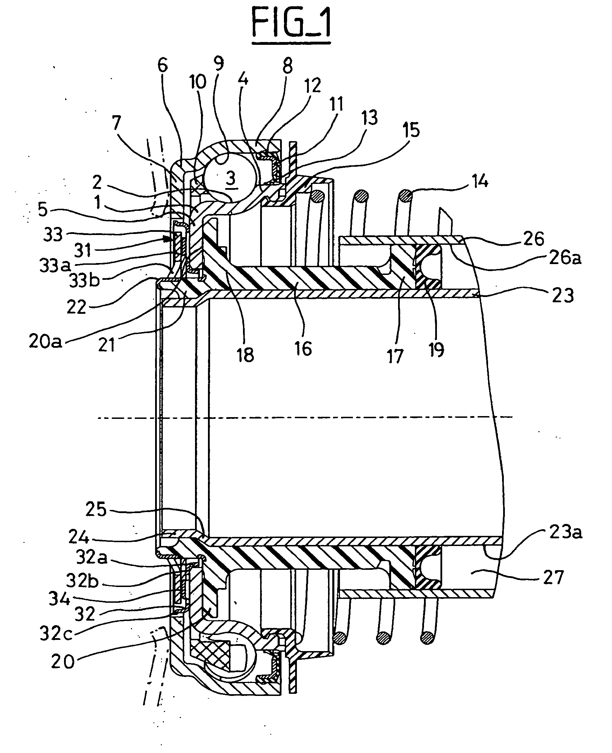

Comme on peut le voir sur la figure 1, la butée de débrayage comprend une bague non tournante de roulement 1 à paroi mince réalisée par emboutissage d'une tôle ou d'un tube présentant un chemin de roulement circulaire en forme de portion de tore 2 pour une rangée d'éléments roulants, ici des billes 3, ledit chemin présentant une section axiale méridienne à profil en arc de cercle concave. La bague intérieure 1 comporte une portion axiale 4 et une portion radiale 5 dirigée vers l'intérieur, lesdites portions radiales 4 et 5 étant disposées d'un côté et de l'autre des éléments roulants 3. La bague non tournante 1 est une bague intérieure. En variante, la bague non tournante 1 peut être une bague extérieure.

Le palier à roulement se complète par une bague extérieure 6 présentant une portion radiale 7 en saillie vers l'intérieur de l'ensemble et une portion cylindrique 8 du côté de la portion radiale 4. La portion radiale 7 est capable de venir en contact avec la surface d'un diaphragme ou d'un élément équivalent, représenté en traits mixtes, permettant l'actionnement d'un embrayage, notamment de véhicule automobile. La bague extérieure 6 possède également une paroi mince qui peut être réalisée par emboutissage d'une tôle ou d'un tube. La bague extérieure 6 présente un chemin de roulement circulaire 9, en forme de portion de tore, pour la rangée d'éléments roulants 3, ledit chemin présentant en section axiale méridienne un profil en arc de cercle concave. Les éléments roulants 3 sont maintenus à espacement circonférentiel régulier par une cage 10 entre le chemin de roulement 2 de la bague intérieure 1 et le chemin de roulement 9 de la bague extérieure 6. Le roulement à billes se complète par un organe d'étanchéité 11 monté de manière étanche dans la portion cylindrique 8 de la bague extérieure 5 et comprenant une armature 12 et une partie souple 13 venant frotter sur une portée cylindrique de la bague non tournante 1.

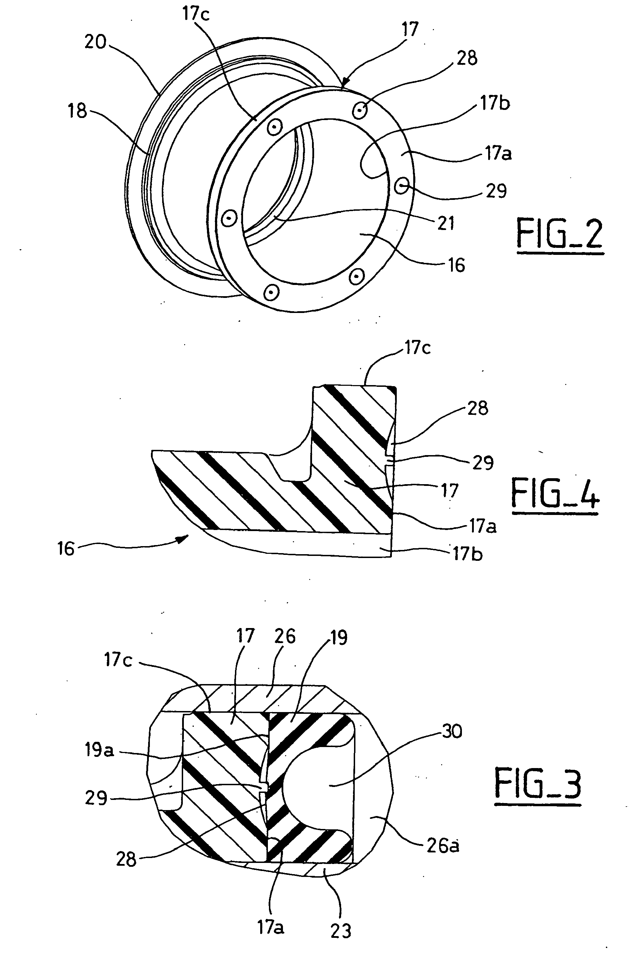

Il est également prévu un ressort 14 de précontrainte de la butée visible sur la figure 2 et un élément d'accrochage 15. Le ressort 14 est de type hélicoïdal, de diamètre de même ordre de grandeur que le diamètre extérieur de la portion radiale 4 de la bague non tournante 1. L'élément d'accrochage 15 vient s'encliqueter sur l'extrémité libre de ladite portion radiale 4 et assure l'interface entre le ressort 14 et la bague non tournante 1. Dans le cas d'une butée de type hydraulique, le ressort 14 assure le maintien de la butée en appui contre le diaphragme avec un certain effort axial de précontrainte en dehors des périodes de manoeuvre de l'embrayage, c'est-à-dire lorsqu'il n'y a pas de pression hydraulique dans le dispositif destiné à actionner la butée.

La butée de débrayage se complète par un élément de manoeuvre 16, visible sur la figure 2, comprenant un piston hydraulique 17 et une tête de manoeuvre 18, associé à un joint d'étanchéité 19. Plus précisément, l'élément de manoeuvre 16 présente une forme annulaire allongée et est réalisé en matériau synthétique. L'élément de manoeuvre 16 pourvu d'un alésage cylindrique et d'une surface extérieure entourée à une certaine distance par le ressort 14.

La tête de manoeuvre 18 de l'élément de manoeuvre 16 comprend une collerette radiale 20 s'étendant vers l'extérieur pourvue d'une surface radiale 20a du côté opposé au piston 17, et une extrémité axiale 21 présentant un diamètre réduit par rapport au reste de l'élément de manoeuvre 16 et pourvue sur sa surface extérieure cylindrique d'un insert métallique 22 réalisé en tôle. L'élément de manoeuvre 16 peut être surmoulé sur l'insert 22. L'insert 22 offre ainsi une surface extérieure résistante à l'abrasion. L'élément de manoeuvre 16 est disposé autour d'un tube-guide 23 en forme de pièce de révolution présentant une extrémité 24 de diamètre réduit correspondant au diamètre réduit de l'extrémité 21 de la tête de manoeuvre 18 et une portion tronconique 25 faisant jonction entre l'extrémité 24 de diamètre réduit et le reste du tube-guide 23. Le piston 17 et le joint d'étanchéité 19 sont en contact avec la surface extérieure 23a du tube-guide 23.

Le tube-guide 23 forme avec le tube 26 de plus grand diamètre un volume annulaire dans lequel sont disposés le piston hydraulique 17 et le joint d'étanchéité 19. Plus précisément, le piston 17 et le joint d'étanchéité 19 sont disposés entre la surface extérieure cylindrique 23a du tube-guide 23 et l'alésage 26a du tube 26. Une chambre annulaire 27 est ainsi formée entre le joint d'étanchéité 19, le tube-guide 23 et le tube 26, le fond de la chambre 27 étant fermé, par exemple par une extension radiale dirigée vers l'intérieur du tube 26, et pourvue de conduites, non représentées, d'amenée de fluide sous pression.

La structure précise du piston 17 et du joint d'étanchéité 19 est mieux visible sur les figures 2 à 4. Le piston 17, situé à l'opposé de la tête de manoeuvre 18, comprend une surface arrière 17a en contact avec le joint d'étanchéité 19, un alésage 17b et une surface extérieure cylindrique 17c. La surface arrière 17a du piston 17 présente une forme générale radiale et est pourvue d'une pluralité, ici six, d'empreintes creuses en forme de cuvettes formant des concavités 28 circonférentiellement régulièrement réparties et présentant un diamètre nettement inférieur à la dimension radiale du piston 17 égale à la distance radiale entre l'alésage 26a et la surface extérieure cylindrique 23a. Les concavités 28 sont de profondeur relativement faible, par exemple de l'ordre de 10 à 30% de leur diamètre, chacune pourvue d'un picot 29 disposé sensiblement en leur centre et s'étendant axialement en direction de la surface arrière 17a du piston jusqu'à venir affleurer ladite surface arrière 17a.

Le joint d'étanchéité 19 présente une forme générale annulaire, de section rectangulaire, avec des bords arrière arrondis et des bords avant à angle vif. Une rainure annulaire 30 est formée à partir de la surface arrière du joint 19 du côté opposé au piston 17, et permet une bonne application, notamment sous pression, du joint contre l'alésage 26a et la surface extérieure 23a. La surface avant du joint d'étanchéité 19 est en contact avec la face arrière 17a du piston 17. A l'état libre, la surface avant du joint d'étanchéité 19 est sensiblement radiale. Toutefois, sous l'effet de la pression, la surface avant du joint d'étanchéité 19 se déforme et tend à se bomber axialement pour épouser la forme de la surface arrière 17a du piston 17. En d'autres termes, le matériau souple constituant le joint d'étanchéité 19, par exemple du caoutchouc ou un matériau synthétique élastomère, vient en saillie axiale totale ou partielle dans les concavités 28 du piston 17 et vient interférer axialement avec les picots 29. Il se produit ainsi une interférence axiale entre le piston 17 et le joint d'étanchéité 19 qui garantit la liaison angulaire mutuelle de ces deux éléments, l'un par rapport à l'autre. Sous l'effet de la pression hydraulique, les picots 29 viennent s'incruster dans la matière tendre du joint, réalisant ainsi un dispositif anti-rotation efficace entre le piston et le joint. Cet effet anti-rotation est renforcé par la déformation locale de la matière souple du joint qui, sous l'effet de la pression, vient légèrement pénétrer dans les empreintes concaves 28.

A l'état embrayé, la chambre 27 est remplie de liquide hydraulique, mais ledit liquide n'est pas sous pression et le roulement de butée est précontraint par le ressort 14 contre un diaphragme avec une légère pré-charge afin que la bague tournante 6 reste en contact axial sur le diaphragme qui entraîne ladite bague tournante 6 par friction. Lors du débrayage, du liquide hydraulique sous pression est introduit dans la chambre 27 et provoque ainsi le déplacement en translation du piston 17 et de la butée vers le diaphragme et l'actionnement du diaphragme. Lorsque l'on ré-embraye, on diminue progressivement la pression du liquide hydraulique, et le diaphragme, par élasticité, repousse le piston 17 dans la chambre 27 jusqu'à sa position initiale.

La butée de débrayage comprend également un moyen de solidarisation axiale 31 entre l'élément de manoeuvre 16 et le roulement de butée, plus précisément la bague non tournante 1. Le moyen de solidarisation axiale 31 est du type permettant un certain déplacement radial de la bague non tournante 1 du roulement de butée par rapport à l'élément de manoeuvre 16 afin de permettre l'autocentrage de la butée sur le diaphragme.

Le moyen de solidarisation axiale 31 entre l'élément de manoeuvre 16 et la bague non tournante 1 du roulement, comprend une coupelle 32 à élasticité axiale et une rondelle 33. La coupelle 32 comprend une courte portion axiale 32a de petit diamètre en contact avec l'extrémité de petit diamètre de la portion radiale 5 de la bague non tournante 1, une portion radiale 32b s'étendant vers l'extérieur à partir de la portion axiale 32a de petit diamètre et une portion de grand diamètre 32c s'étendant axialement à l'opposé de la portion axiale 32a et radialement légèrement vers l'extérieur pour venir former un passage étroit avec l'extrémité de petit diamètre de la portion radiale 7 de la bague tournante 6. La portion radiale 32b est en contact avec une face de la portion radiale 5, tandis que la surface avant 20a de la collerette 20 de la tête de manoeuvre 18 est en contact avec la face opposée de la portion radiale 5 de la bague non tournante 1.

Une pluralité de languettes 34, à élasticité axiale, sont formées dans la portion radiale 32b et s'étendent axialement à l'opposé de la portion radiale 5 de la bague non tournante 1. Les languettes 34 sont circonférentiellement régulièrement réparties et s'étendent dans le sens circonférentiel, tout en étant en contact avec la rondelle 33 sur laquelle elles s'appuient. La rondelle 33 comprend une portion radiale 33a se prolongeant vers l'intérieur par des pattes découpées 33b légèrement obliques et s'étendant axialement à l'opposé de la portion radiale 5, tout en venant s'arc-bouter par leurs extrémités libres sur l'insert 22 de l'extrémité 21 de la tête de manoeuvre 18. La rondelle 33 est ainsi accrochée sur l'élément de manoeuvre 16. La coopération de la coupelle 32 et de la rondelle 33 permet de mettre en appui axial et de maintenir la portion radiale 5 de la bague non tournante 1 contre la collerette 20 de la tête de manoeuvre 18.

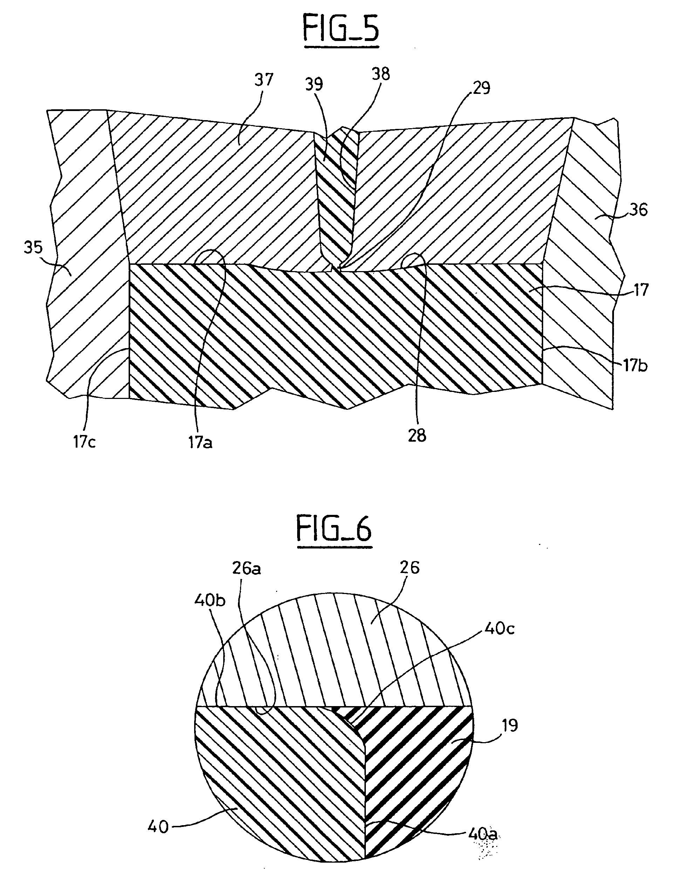

Le piston 17 peut être fabriqué par moulage par injection, comme illustré sur la figure 5. Le moule partiellement représenté comprend une pièce creuse annulaire 35, permettant de définir la surface extérieure 17c, une pièce cylindrique intérieure 36, permettant de définir la surface intérieure 17b, et une pièce d'extrémité 37 venant s'emboîter entre les pièces 35 et 36 et permettant de définir la surface arrière 17a du piston 17. La pièce d'extrémité 37 est pourvue de six canaux d'injection 38, dont un seul est visible sur la figure 5. Les canaux d'injection 38 se rétrécissent à leur extrémité terminale. La pièce d'extrémité 37 du moule se raccorde aux pièces extérieure 35 et intérieure 36 à angle droit.

Lors de l'opération de moulage, la matière synthétique devant constituer le piston 17 passe par les canaux d'injection 38 et vient remplir l'espace formé entre les différentes parties 35 à 37 du moule. Après durcissement et lors de l'ouverture du moule, la partie 37 se dégage axialement des parties 35 et 36, ce qui provoque la séparation de la carotte 39 restant dans les canaux d'injection 38 du piston 17, en laissant subsister les picots 29.

Par ailleurs, le fait d'avoir une pièce d'extrémité 37 distincte des pièces extérieure 35 et intérieure 36 permet de réaliser une jonction à angle droit entre ces pièces et permet donc de former un piston 17 dont la surface extérieure cylindrique 17c se raccorde sensiblement à angle droit avec la surface arrière radiale 17a, de même que la surface intérieure cylindrique 17b se raccorde sensiblement à angle droit avec la surface arrière 17a du piston 17.

De tels angles droits ne peuvent être réalisés avec un moule dont les parois 35, 36 et 37 seraient d'un seul tenant, en raison des congés de raccordement qui sont inévitables à l'usinage. L'on se trouverait alors dans la situation illustrée sur la figure 6, avec un piston 40 dont la surface arrière 40a se raccorde aux surfaces cylindriques voisines, par exemple la surface cylindrique 40b avec un congé de raccordement important, ce qui se traduirait en fonctionnement par une déformation du joint 19 qui tendrait à fluer et à occuper l'espace libre subsistant entre l'alésage 26a du tube 26 et le bord arrondi 40c du piston 40 entre la surface arrière 40a et la surface cylindrique 40b. Ceci peut se traduire par une augmentation des efforts de frottement du joint et par une dégradation progressive des bords du joint par coincement entre l'arrondi 40c et l'alésage 26a, avec des conséquences néfastes sur l'étanchéité.

Au contraire, l'invention permet de réaliser un piston dont la surface arrière se raccorde aux surfaces cylindriques voisines par des angles vifs, permettant de prévenir le phénomène de fluage et de conserver au joint d'étanchéité 19 sa forme d'origine dans des zones critiques pour l'étanchéité, ce qui permet d'augmenter sa durée de vie.

Le fait de former les picots 29 par des résidus de moulage est particulièrement avantageux, en ce sens que l'on peut se servir d'un moule de forme simple, plus robuste et moins coûteux. Les picots 29 permettent au joint d'étanchéité de venir simplement en appui axial sur le piston 17 tout en bénéficiant d'une retenue angulaire par rapport audit piston 29. Parmi les autres avantages d'un moulage avec injection par l'arrière du piston 17, on notera un meilleur positionnement dans le moule de l'insert métallique 22 de l'avant de l'élément de manoeuvre 16, l'insert 22 étant maintenu naturellement en place au fond du moule par la pression de la résine en fusion. On parvient ainsi, grâce à un procédé adapté et sans surcoût, à obtenir un piston de structure simple, présentant de bonnes caractéristiques fonctionnelles, notamment sur le plan de l'étanchéité et de l'endurance.

## Revendications

1. Dispositif de butée de débrayage à commande hydraulique, du type comprenant un élément de manoeuvre (16) pourvu d'un piston annulaire (17) et d'un joint d'étanchéité (19) en contact avec le piston, et un palier à roulement solidaire axialement de l'élément de manoeuvre (16), **caractérisé par le fait que** le piston (17) comprend une surface arrière (17a) en contact avec ledit joint d'étanchéité (19), au moins une concavité (28) étant formée localement dans ladite surface arrière du piston.

2. Dispositif selon la revendication 1, **caractérisé par le fait que** piston comprend un corps et au moins un picot (29) en saillie dans la concavité (28) à partir dudit corps, le picot étant monobloc avec le corps.

3. Dispositif selon la revendication 2, **caractérisé par le fait qu**'un picot est disposé dans chaque concavité.

4. Dispositif selon la revendication 2 ou 3, **caractérisé par le fait que** le picot est en saillie axiale.

5. Dispositif selon l'une quelconque des revendications 2 à 4, **caractérisé par le fait que** le picot affleure la surface arrière du piston.

6. Dispositif selon l'une quelconque des revendications précédentes, **caractérisé par le fait qu'**une pluralité de concavités (28) sont formées dans la surface arrière.

7. Dispositif selon l'une quelconque des revendications précédentes, **caractérisé par le fait que** le piston (17) comprend une surface cylindrique intérieure (17b) et une surface cylindrique extérieure (17c) se raccordant à la surface arrière en formant un angle vif.

8. Dispositif selon l'une quelconque des revendications précédentes, **caractérisé par le fait que** le piston (17) est réalisé en matériau synthétique moulé.

9. Système de commande d'embrayage comprenant un cylindre et un dispositif selon l'une quelconque des revendications précédentes monté dans le cylindre.

10. Procédé de fabrication d'un piston annulaire de butée de débrayage, le piston comprenant une surface arrière dans laquelle au moins une cuvette est formée localement, procédé dans lequel on injecte la matière du piston dans un moule du côté de la surface arrière du piston.

11. Procédé selon la revendication 10, dans lequel un moule comprend des canaux d'injection de matière à mouler débouchant dans ladite cuvette.

12. Procédé selon la revendication 10 ou 11, dans lequel un moule comprend un canal d'injection de matière à mouler par cuvette.

13. Procédé selon la revendication 10, 11 ou 12, dans lequel au moins un picot en saillie est formé par un résidu de démoulage monobloc avec le reste du piston.

## Claims

1. Hydraulically operated clutch release bearing device of the type comprising an operating element (16) provided with an annular piston (17) and a seal (19) in contact with the piston, and a rolling-contact bearing axially secured to the operating element (16), **characterized in that** the piston (17) comprises a rear surface (17a) in contact with the said seal (19), at least one concave region (28) being formed locally in the said rear surface of the piston.

2. Device according to Claim 1, **characterized in that** the piston comprises a body and at least one pip (29) projecting into the concave region (28) from the said body, the pip being of one piece with the body.

3. Device according to Claim 2, **characterized in that** a pip is arranged in each concave region.

4. Device according to Claim 2 or 3, **characterized in that** the pip projects axially.

5. Device according to any one of Claims 2 to 4, **characterized in that** the pip lies flush with the rear surface of the piston.

6. Device according to any one of the preceding claims, **characterized in that** a plurality of concave regions (28) are formed in the rear surface.

7. Device according to any one of the preceding claims, **characterized in that** the piston (17) comprises an interior cylindrical surface (17b) and an exterior cylindrical surface (17c) which connect to the rear surface thereby forming a sharp corner.

8. Device according to any one of the preceding claims, **characterized in that** the piston (17) is made of a moulded synthetic material.

9. Clutch operating system comprising a cylinder and a device according to any one of the preceding claims mounted in the cylinder.

10. Method of manufacturing an annular clutch release bearing piston, the piston comprising a rear surface in which at least one bowl is locally formed, in which method the piston material is injected into a mould on the rear surface side of the piston.

11. Method according to Claim 10, in which a mould comprises moulding material injection ducts opening into the said bowl.

12. Method according to Claim 10 or 11, in which a mould comprises one moulding material injection duct per bowl.

13. Method according to Claim 10, 11 or 12, in which at least one projecting pip is formed of sprue of one piece with the rest of the piston.

## Patentansprüche

1. Hydraulisch zu betätigende Kupplungsausrückervorrichtung, in der Bauart, zu der gehören: ein Ausrückelement (16), das einen ringförmigen Kolben (17) und eine in Berührung mit dem Kolben stehende Dichtungseinrichtung (19) aufweist, und ein in axialer Richtung mit dem Ausrückelement (16) fest verbundenes Wälzlager, **dadurch gekennzeichnet, dass** der Kolben (17) eine mit der Dichtungseinrichtung (19) in Berührung stehende hintere Fläche (17a) aufweist, wobei in der hinteren Fläche des Kolbens örtlich wenigstens eine Vertiefung (28) ausgebildet ist.

2. Vorrichtung nach Anspruch 1, **dadurch gekennzeichnet, dass** der Kolben einen Grundkörper und wenigstens ein Zäpfchen (29) aufweist, das ausgehend von dem Grundkörper innerhalb die Vertiefung (28) vorsteht, wobei das Zäpfchen mit dem Grundkörper einstückig ausgebildet ist.

3. Einrichtung nach Anspruch 2, **dadurch gekennzeichnet, dass** in jeder Vertiefung ein Zäpfchen angeordnet ist.

4. Einrichtung nach Anspruch 2 oder 3, **dadurch gekennzeichnet, dass** das Zäpfchen sich in axialer Richtung erhebt.

5. Einrichtung nach einem der Ansprüche 2 bis 4, **dadurch gekennzeichnet, dass** das Zäpfchen auf gleicher Höhe mit der hinteren Fläche des Kolbens endet.

6. Einrichtung nach einem der vorhergehenden Ansprüche, **dadurch gekennzeichnet, dass** in der hinteren Fläche eine Vielzahl von Vertiefungen (28) ausgebildet sind.

7. Einrichtung nach einem der vorhergehenden Ansprüche, **dadurch gekennzeichnet, dass** der Kolben (17) eine zylindrische Innenumfangsfläche (17b) und eine zylindrische Außenumfangsfläche (17c) aufweist, die sich an die hintere Fläche anschließen, wobei sie eine scharfe Kante bilden.

8. Einrichtung nach einem der vorhergehenden Ansprüche, **dadurch gekennzeichnet, dass** der Kolben (17) aus gespritztem Kunststoff hergestellt ist.

9. Kupplungsbetätigungssystem, mit einem Zylinder und einer in dem Zylinder angebrachten Einrichtung nach einem der vorhergehenden Ansprüche.

10. Verfahren zur Herstellung eines ringförmigen Kupplungsausrückerkolbens, wobei der Kolben eine hintere Fläche aufweist, in der örtlich wenigstens eine Schüssel ausgebildete ist, Verfahren bei dem das Kolbenmaterial auf der der hinteren Fläche des Kolbens zugewandten Seite in eine Spritzgussform eingeschossen wird.

11. Verfahren nach Anspruch 10, bei dem eine Spritzgussform Kanäle zum Einschießen von Spritzmaterial aufweist, die in die Schüssel einmünden.

12. Verfahren nach Anspruch 10 oder 11, bei dem eine Spritzform einen Kanal zum Einschießen von Werkstoff durch die Schüssel hindurch enthält.

13. Verfahren nach Anspruch 10, 11 oder 12, bei dem wenigstens eine vorspringendes Zäpfchen durch einen Angusszapfen gebildet wird, der einstückig mit dem übrigen Kolben ist.
